# EUROPÄISCHE PATENTSCHRIFT

(11) **EP 2 327 642 B1**
(45) Veröffentlichungstag und Bekanntmachung des Hinweises auf die Patenterteilung: **28.12.2011**
(21) Anmeldenummer: 10014363.5
(22) Anmeldetag: 08.11.2010
(51) Int. Cl.: B65G 1/02, E05D 15/06, E06B 3/46

(54) **Regallagertor mit Schliesssensor**
Shelf storage door with locker sensor
Porte de magasin de stockage avec capteur de verrouillage

(30) Priorität: 26.11.2009 AT 18752009
(43) Veröffentlichungstag der Anmeldung: 01.06.2011
(73) Patentinhaber: LTW Intralogistics GmbH, 6961 Wolfurt (AT)
(72) Erfinder: Gerber, Urs, 6900 Bregenz (AT); Eberle, Konrad, 6900 Bregenz (AT)
(74) Vertreter: Gangl, Markus

(56) Entgegenhaltungen:
- EP-A2- 1 696 095
- DE-A1- 19 733 415

## Beschreibung

Die Erfindung betrifft eine Anordnung umfassend zumindest ein, insbesondere schienengeführtes, Tor eines Regallagers, einen Kupplungsmechanismus zum lösbaren Verkuppeln des Tores in einer Schließstellung und eine Entkuppel- und Verschiebevorrichtung zum Öffnen und Verschieben des Tores, mit der der Kupplungsmechanismus aus der Schließstellung in eine Offenstellung bringbar ist und das Tor verschiebbar ist, sowie ein Regallager mit einer solchen Anordnung.

Zum Verstauen bzw. Lagern von Lagergut in Lagerhallen sind bereits verschiedenste Systeme bekannt, wobei in Regallagerreihen die einzelnen Palettenstellplätze für das Lagergut durch Tore bzw. Teilabschnitte von Toren vom Regallagergang getrennt sind, um das Kommissionierpersonal vor automatisch verfahrenden Regalbediengeräten zu schützen. Dieses Regalbediengerät verfährt dabei entlang des Regallagergangs (meist auf Schienen), öffnet bzw. verschiebt ein bestimmtes Tor und entnimmt das Lagergut, wenn eine Entnahme eines bestimmten Lagergutes von einem Palettenstellplatz erfolgen soll.

Beispielsweise ist dazu aus der EP 1 696 095 eine Anordnung gemäß dem Oberbegriff des Anspruchs 1 bekannt, bei dem ein Klinken-Bolzen-Mechanismus (Kupplungsmechanismus) einzeine Teilabschnitte von Toren verbindet, die durch einen Mitnehmer (Entkuppel- und Verschiebevorrichtung) voneinander getrennt, verschoben und wieder geschlossen werden können. Manchmal tritt dabei nach dem Schließen das Problem auf, dass der Klinken-Bolzen-Mechanismus nicht richtig verschlossen ist, wenn beispielsweise das Lagergut nicht ganz richtig eingeräumt wurde bzw. der Mitnehmer das bewegte Tor nicht bis zur vollständigen Schließstellung mitgenommen hat. Eine solche Störung wurde bis jetzt vom System erst dann erkannt, wenn dasselbe Tor irgendwann wieder angefahren bzw. geöffnet wurde. In der Zwischenzeit steht aber dieses eine Tor zumindest einen Spalt offen, was unerwünscht ist.

Die Aufgabe der Erfindung besteht daher darin, eine gegenüber dem Stand der Technik verbesserte Anordnung eines Regallagersystems mit Kupplungsmechanismus und Entkuppel- und Verschiebevorrichtung anzugeben. Insbesondere soll das nicht ordnungsgemäße Schließen bzw. eine Störung beim Schließen von Toren sofort erkannt werden.

Dies wird für eine Anordnung mit den Merkmalen des Oberbegriffes des Anspruches 1 durch einen Schließsensor, der die Schließstellung des Kupplungsmechanismus überwacht, wobei der Schließsensor Teil der Entkuppel- und Verschiebevorrichtung ist, erreicht. Dadurch kann eine Fehlstellung des Kupplungsmechanismus nach dem - nicht erfolgreichen Schließen erkannt werden, wonach zur Behebung beispielsweise ein nochmaliger automatischer Schließversuch durchgeführt werden kann oder das Problem händisch durch einen Bediener behoben werden kann.

Da die Entkuppel- und Verschiebevorrichtung bevorzugt an einem Regalbediengerät angeordnet ist, das entlang einer Schiene eines Regallagerganges verfährt, wird somit pro Regallagergang nur ein Schließsensor und eine Entkuppel- und Verschiebevorrichtung benötigt. Die Schiene zum Verfahren des Regalbediengeräts kann beispielsweise am Regallagergangboden angeordnet sein. Es kann aber auch vorgesehen sein, dass oberhalb der Tore entlang des Regallagerganges eine eigene Schiene an den Regalen bzw. Regalstehern angebracht ist, an der die Entkuppel- und Verschiebevorrichtung verfährt. Anstatt eines Regalbediengeräts kann auch ein Verschiebewagen oder Ähnliches im Regallager vorgesehen sein.

Bevorzugt ist vorgesehen, dass das Tor wenigstens zwei Teilabschnitte und pro Teilabschnitt einen verbindenden Kupplungsmechanismus umfasst.

Besonders bevorzugt kann vorgesehen sein, dass der Kupplungsmechanismus einen Rasthebel und ein Verbindungselement als Gegenstück zum Rasthebel umfasst, wobei der Rasthebel an einem Regalsteher oder an einem ersten Teilabschnitt des Tores und das Verbindungselement an einem zweiten Teilabschnitt des Tores angeordnet ist, wobei - wie auch aus dem Stand der Technik bekannt - der Rasthebel verschwenkbar und in Schließrichtung federbelastet am ersten Teilabschnitt oder am Regalsteher und das Verbindungselement als zapfenförmiger Fortsatz am zweiten Teilabschnitt angeordnet ist Alternativ könnte auch eine sonstige Rastverbindung vorgesehen sein, bei der im zweiten Teilabschnitt eine Einrastausnehmung vorgesehen ist, in welche der Rasthebel eingreifen kann. Alternativ können auch magnetische oder sonstige Kupplungsmechanismen vorgesehen sein, bei welchen ein Schließsensor die Schließposition vor und nach dem Öffnen vergleichen kann und gegebenenfalls eine Störungsmeidung ausgibt. Im gemäß dieser Erfindung bevorzugten Ausführungsfall des Kupplungsmechanismus als Klinken-Bolzen-Mechanismus überwacht der Schließsensor die Position des Rasthebels (Klinke).

Gemäß einem ganz besonders bevorzugten Ausführungsbeispiel kann dazu vorgesehen sein, dass der Schließsensor als Distanzsensor ausgebildet ist, der den Abstand zum Kupplungsmechanismus, vorzugsweise mittels Laserstrahlen detektiert. Das Überwachen erfolgt dabei dadurch, dass der Distanzsensor den Abstand zum Rasthebel des Kupplungsmechanismus in der Schließstellung vor jedem Öffnen des Kupplungsmechanismus speichert, mit dem Abstand in der Schließstellung nach dem Schließen des Kupplungsmechanismus vergleicht und bei Änderung des Abstands zum Rasthebel ein Warnsignal ausgibt. Danach kann - wie bereits erwähnt - beispielsweise der Schließvorgang wiederholt werden oder ein Bediener das Problem beheben.

Wie aus dem Stand der Technik bekannt, kann die Entkuppel- und Verschiebevorrichtung einen Mitnehmer aufweisen, der vorzugsweise entlang einer zur Regallagergangschiene parallel ausgerichteten Schwenkachse, von einer Freilaufstellung in eine Verschiebestellung verschwenkbar ist, wobei in dieser Verschiebestellung wenigstens ein Teilabschnitt des Tores durch den Mitnehmer verschiebbar ist. Wesentlich dabei ist, dass die Entkuppel- und Verschiebevorrichtung einerseits den Kupplungsmechanismus löst und andererseits das bzw. die gewünschten Tor(e) verschieblich mitnimmt, wobei bevorzugt die Entkupplung und Verschiebung durch den Mitnehmer erfolgen kann, der beispielsweise durch eine im Wesentlichen quer zur Regallagerrichtung ausgerichtete Bewegung den Kupplungsmechanismus löst, wodurch er von der Freilaufstellung in die Verschiebestellung gelangt und damit die gewünschten Tore verschieben kann. Bei einer besonders einfachen Ausführungsweise kann der Mitnehmer den Teilabschnitt des Tores über das am Teilabschnitt angeordnete Verbindungselement verschieben.

Schutz wird auch begehrt für ein Regallager mit zumindest einem Tor zum Trennen (bzw. zum öffenbaren Verschließen) eines Palettenstellplatzes von einem Regellagergang, welches eine Anordnung nach einem der Ansprüche 1 bis 9 aufweist. Besonders bevorzugt kann bei einem solchen Regallager vorgesehen sein, dass mehreren Palettenstellplätzen ein Tor zugeordnet ist, wobei das Tor zumindest zwei Teilabschnitte aufweist, die wahlweise gemeinsam, einzeln oder in Gruppen öffenbar sind, wobei pro Palettenplatz ein Teilabschnitt des Tores vorgesehen ist und die Teilabschnitte lösbar miteinander koppelbar sind.

Weiters soll auch ein Verfahren gemäß Anspruch 12 geschützt werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1 bis 4: eine Regallageranordnung nach dem Stand der Technik,
- Fig. 5: die Entkuppel- und Verschiebevorrichtung in Freilaufstellung und den Kupplungsmechanismus in Schließstellung,
- Fig. 6: die Entkuppel- und Verschiebevorrichtung in Freilaufstellung und den Kupplungsmechanismus nach nicht erfolgreichem Schließen,
- Fig. 7: eine schematische Draufsicht auf das Regallager,
- Fig. 8: die Anordnung gemäß Fig. 5 mit Regalbediengerät,
- Fig.9: die Anordnung gemäß Fig. 6 mit Regalbediengerät und Wamsignalausgabe,
- Fig. 10: eine schematische Draufsicht auf das Regellager bei einem Torteilabschnitt in Offenstellung und den Mitnehmer in Verschiebestellung, und
- Fig. 11: eine schematische Draufsicht auf ein Regallager nach dem Stand der Technik.

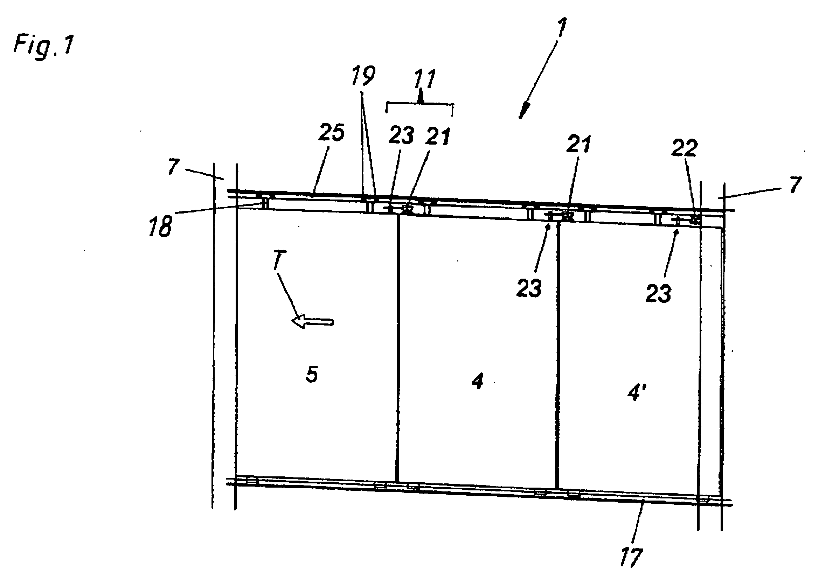

Die Fig. 1 bis 4 zeigen ein Regallager, wie es im Wesentlichen bereits aus der EP 1 696 095 bekannt ist. Sämtliche, in dieser EP 1 696 095 genannten Ausführungen können auch in vollem Umfang für die hier vorliegende Erfindung herangezogen werden.

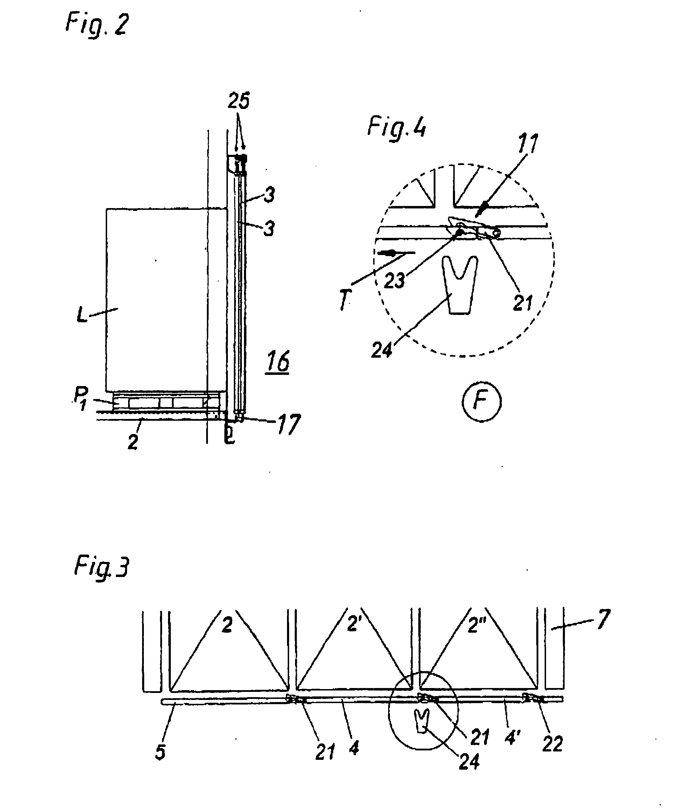

Fig. 1 zeigt dabei eine Frontansicht eines Regallagertores 3, welches aus den Teilabschnitten 5, 4 und 4' besteht. Diese Teilabschnitte 5, 4 und 4' sind entlang einer an Regalstehern 7 befestigten Schiene 25 verschiebbar geführt. Im Bodenbereich kann ebenfalls eine Bodenführungsschiene 17 am Lagerboden montiert sein, wodurch ein Ausschwenken der einzelnen Tore 3 bzw. der Teilabschnitte 5, 4 und 4' unterbunden werden kann (siehe Fig. 2). Die einzelnen Teilabschnitte 5, 4 und 4' sind jeweils über zwei Führungsglieder 18 mit Rollen 19 in der Schiene 25 geführt. Die Verbindung zwischen den einzelnen Teilabschnitten 4 und 4' bzw. 5 und 4 erfolgt durch den Kupplungsmechanismus 11, der einerseits aus einem Rasthebel 21, welcher am Tor 4 bzw. 4' befestigt ist, und andererseits aus dem Verbindungselement 23, welcher an den Teilabschnitten 5, 4 und 4' angeordnet ist und bevorzugt in Form eines bolzenförmigen Haltefortsatzes ausgebildet ist, bestehen. Der Rasthebel 22 für den in Türöffnungsrichtung T ersten Teilabschnitt 4' des Tores 3 kann beispielsweise an der Schiene 25 oder dem Türsteher 7 angebracht sein.

In Fig. 2 ist ein Schnitt durch das Regallager 1 gezeigt, wobei am Palettenstellplatz 2 eine Palette P₁ mit darauf befindlichem Lagergut L abgestellt bzw. gelagert ist. Dieser Palettenstellplatz 2 ist durch zumindest ein Tor 3 vom Regallagergang 16 getrennt, wobei die einzelnen Tore 3 an profilförmigen Schienen 25 und der Bodenführungsschiene 17 verschieblich geführt sind.

In Fig. 3 sind drei nebeneinander angeordnete Palettenstellplätze 2, 2' und 2" von oben dargestellt, denen jeweils ein Teilabschnitt 5, 4 bzw. 4' des Tores 3 zugeordnet ist. Der Kupplungsmechanismus 11 ist dabei sowohl in geöffneter als auch in geschlossener Stellung dargestellt.

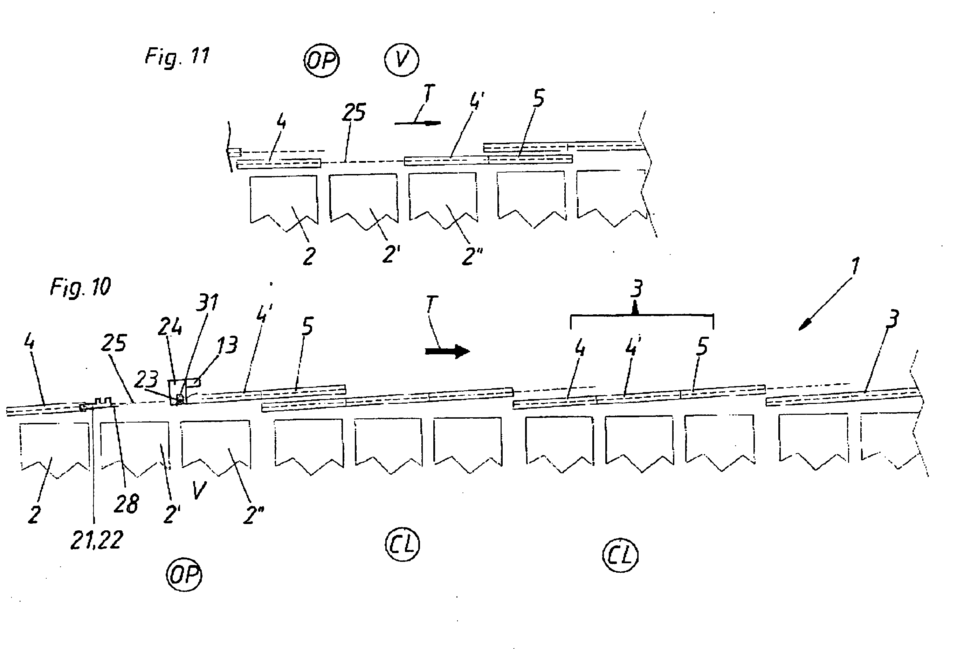

In Fig. 4 ist ein Detailausschnitt aus Fig. 3 gezeigt, wobei zumindest der gabelförmige Mitnehmer 24 der Entkuppel- und Verschiebevorrichtung 12 in Freilaufstellung F dargestellt ist. Dieser Mitnehmer kann quer zur Ausrichtung der Tore 3 in Richtung Kupplungsmechanismus 11 bewegt werden, wodurch sich der Rasthebel 21 von der Schließstellung CL in die bereits angedeutete Offenstellung OP bewegen kann, wonach durch eine Verschiebebewegung parallel zur Ausrichtung der Tore 3 der Mitnehmer 24 zumindest einen Teilabschnitt 4, 4', 5 des Tores 3 über das Verbindungselement 23 verschiebt (Verschiebestellung V). Dazu passend ist in Fig. 11 - ohne Kupplungsmechanismus 11 und Entkuppel- und Verschiebevorrichtung 12 - das Tor 3 in Offenstellung OP gezeigt, wobei durch Lösen des Kupplungsmechanismus 11 zwischen den Teilabschnitten 4 und 4' eine Verschiebung der beiden Teilabschnitte 4' und 5 durch die Entkuppel- und Verschiebevorrichtung 12 entlang der Schiene 25 in Türöffnungsrichtung T erfolgt. Dadurch ist der Zugang zum Palettenstellplatz 2' für ein Regalbediengerät 14 (hier nicht dargestellt) möglich.

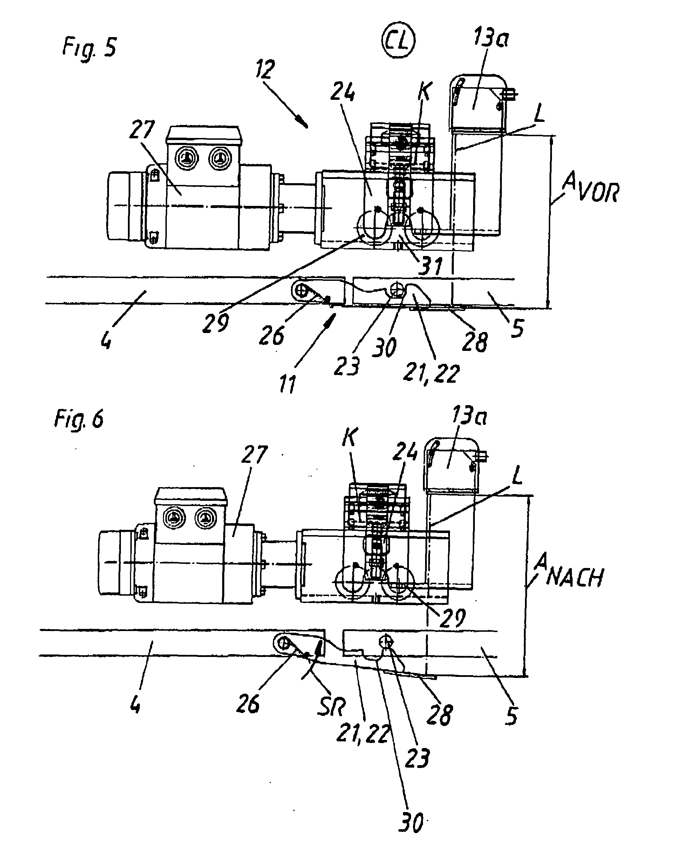

In Fig. 5 ist nun ein Ausführungsbeispiel einer erfindungsgemäßen Anordnung in einer Draufsicht gezeigt. Diese Anordnung besteht im Wesentlichen aus der Entkuppel- und Verschiebevorrichtung 12, dem Schließsensor 13 (insbesondere Distanzsensor 13a) und dem Kupplungsmechanismus 11, der einzelne Teilabschnitte 4 und 5 eines Regallagertores 23 lösbar verbindet. In dieser Fig. 5 ist der Kupplungsmechanismus 11 in Schließstellung CL dargestellt, wobei der Rasthebel 21, 22 schwenkbar am Teilabschnitt 4 gelagert ist und über einen ausgebuchteten Bereich 30 ein am Teilabschnitt 5 angebrachtes Verbindungselement 23 durch die in Schließrichtung SR beaufschlagte Feder 26 hält.

Der Rasthebel 21, 22 weist einen Messfortsatz 28 auf, zu welchem der Distanzsensor 13a mittels eines Laserstrahles L den Abstand A_{VOR} vor dem Öffnen des Kupplungsmechanismus 11 ermittelt und speichert.

Die Entkuppel- und Verschiebevorrichtung 12 weist einen Mitnehmer 24 mit einem gabelförmigen Aufnahmebereich 31, der zwischen zwei Rollen 29 ausgebildet ist, auf und ist vom Mitnehmerantrieb 27 angetrieben. Um den Kupplungsmechanismus 11 zu lösen, wird der Mitnehmer 24 entlang der Schwenkachse K geschwenkt und in Richtung Kupplungsmechanismus 11 bewegt, wodurch über die Rollen 29 der Rasthebel 21, 22 gegen die Federkraft 26 vom Verbindungselement 23 wegbewegt wird, wodurch das Verbindungselement 23 zwischen die beiden Rollen 29 in den Aufnahmebereich 31 des Mitnehmers 24 in Verschiebestellung V gelangt (hier nicht dargestellt, siehe aber Fig. 10).

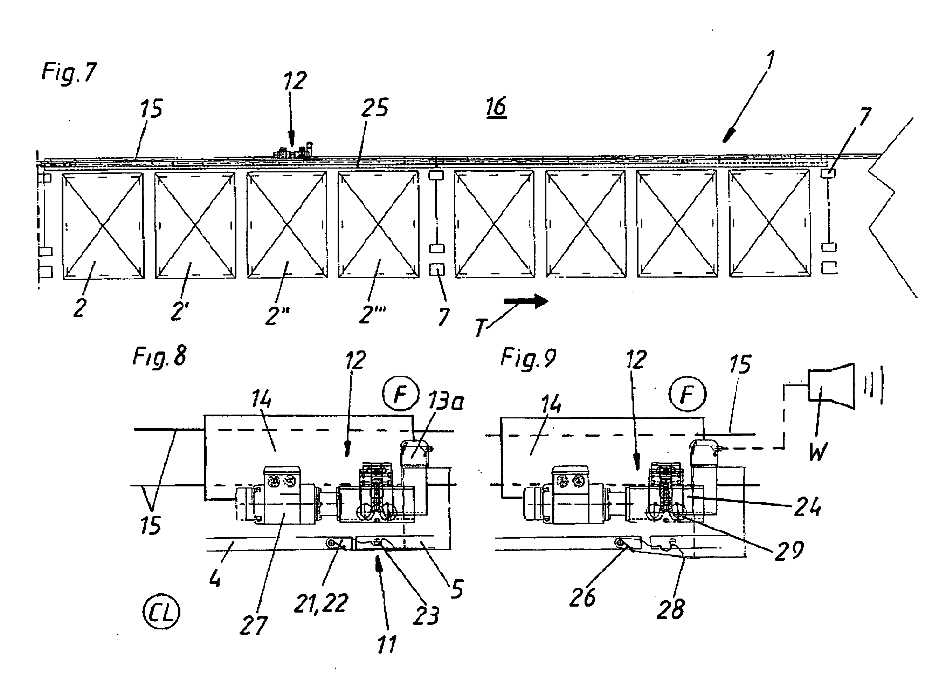

Wenn nach dem - zumindest versuchten - Schließen, wie in Fig. 6, der Rasthebel 21, 22 trotz der Feder 26 nicht mehr richtig am Verbindungselement 23 mit der Ausbuchtung 30 einschnappen kann, ist der Abstand A_{NACH} größer gegenüber dem Abstand A_{VOR}, der im Distanzsensor 13a gespeichert ist. Wenn sich diese Abstände A_{VOR} und A_{NACH} unterscheiden, gibt der Distanzsensor 13a bzw. eine damit verbundene Steuer- oder Regeleinheit der gesamten Anordnung ein Warnsignal W aus (siehe auch Fig. 9).

Wie in den Fig. 8 und 9 gezeigt, kann die Entkuppel- und Verschiebevorrichtung 12 samt Schließsensor 13 Teil eines Regalbediengeräts 14 sein, welches an Schienen 15 im Regallagergang 16 geführt ist. Dabei ist jeweils der Mitnehmer 24 in Freilaufstellung F dargestellt und zumindest in Fig. 9 die Schließstellung CL des Kupplungsmechanismus 11 nicht gänzlich erreicht.

Alternativ kann - wie in Fig. 7 dargestellt - die Entkuppel- und Verschiebevorrichtung 12 an einer vom Regalbediengerät 14 entkoppelten separaten Schiene 15 - die beispielsweise an den Regalstehern 7 montiert ist - verfahren werden. Bevorzugt sind die gesamten Abläufe der hier gezeigten Anordnung bzw. des hier gezeigten Regallagers durch eine automatische Steuer- bzw. Regeleinheit gesteuert bzw. geregelt.

Somit ist durch die hier dargelegte Erfindung eine die sicherheitstechnischen Vorgaben für ein Regallager verbessernde Anordnung gezeigt, bei der die Schließstellung eines Kupplungsmechanismus (Klinken-Solzen-Mechanismus) garantiert ist. Durch den erfindungsgemäßen Schließsensor - insbesondere einem Distanzsensor - erfolgt die Überwachung der Schließstellung und die Ausgabe eines Warnsignals bei nicht ordnungsgemäße Schließung eines Tores eines Palettenstellplatzes. Dabei misst der Schließsensor den Ist-Abstand zu einem Teil, bevorzugt dem Rasthebel des Kupplungsmechanismus, und speichert diesen. Beim Wiederverschließen des Kupplungsmechanismus wird der Abstand zu diesem Rasthebel erneut gemessen. Weicht dieser Wert vom gespeicherten ab, wird eine Meldung abgesetzt, da der Mechanismus anscheinend nicht richtig verschlossen ist. Danach kann die automatische oder durch einen Mitarbeiter händische Störungsbehebung erfolgen, wonach das Regalbediengerät weiterfahren kann und der ungehinderte Betrieb des gesamten Regallagers fortgeführt werden kann.

## Patentansprüche

1. Anordnung umfassend
- zumindest ein, insbesondere schienengeführtes, Tor (3) eines Regallagers (1),
- einen Kupplungsmechanismus (11) zum lösbaren Verkuppeln des Tores (3) in einer Schließstellung (CL) und
- eine Entkuppel- und Verschiebevorrichtung (12) zum Öffnen und Verschieben des Tores (3), mit der der Kupplungsmechanismus (11) aus der Schließstellung (CL) in eine Offenstellung (OP) bringbar ist und das Tor (3) verschiebbar ist,
**gekennzeichnet durch**
- einen Schließsensor (13), der die Schließstellung (CL) des Kupplungsmechanismus (11) überwacht, wobei der Schließsensor (13) Teil der Entkuppel- und Verschiebevorrichtung (12) ist.

2. Anordnung nach Anspruch 1, **dadurch gekennzeichnet, dass** die Entkuppel- und Verschiebevorrichtung (12) an einem Regalbediengerät (14) angeordnet ist, das entlang einer Schiene (15) eines Regallagerganges (16) verfährt.

3. Anordnung nach Anspruch 1 oder 2, **dadurch gekennzeichnet, dass** das Tor (3) wenigstens zwei Teilabschnitte (4, 4', 5) und pro Teilabschnitt (4, 4', 5) einen Kupplungsmechanismus (11) umfasst.

4. Anordnung nach Anspruch 3, **dadurch gekennzeichnet, dass** jeder Kupplungsmechanismus (11) einen Rasthebel (21, 22) und ein Verbindungselement (23) als Gegenstück zum Rasthebel (21, 22) umfasst, wobei der Rasthebel (21, 22) an einem Regalsteher (7) oder an einem ersten Teilabschnitt (4, 4') des Tores (3) und das Verbindungselement (23) an einem zweiten Teilabschnitt (4, 4', 5) des Tores (3) angeordnet ist.

5. Anordnung nach Anspruch 4, **dadurch gekennzeichnet, dass** der Rasthebel (21, 22) verschwenkbar und in Schließrichtung (SB) federbelastet am ersten Teilabschnitt (4, 4') oder am Regalsteher (7) und das Verbindungselement (23) als zapfenförmiger Fortsatz am zweiten Teilabschnitt (4, 4', 5) angeordnet ist.

6. Anordnung nach Anspruch 4 oder 5, **dadurch gekennzeichnet, dass** der Schließsensor (13) die Position des Rasthebels (21, 22) überwacht.

7. Anordnung nach einem der Ansprüche 1 bis 6, **dadurch gekennzeichnet, dass** der Schließsensor (13) als Distanzsensor (13a) ausgebildet ist, der den Abstand zum Kupplungsmechanismus (11), vorzugsweise mittels Laserstrahlen detektiert.

8. Anordnung nach einem der Ansprüche 3 bis 7, **dadurch gekennzeichnet, dass** die Einkuppel- und Verschiebevorrichtung (12) einen Mitnehmer (24) aufweist, der vorzugsweise entlang einer zur Regallagergangschiene (15) parallel ausgerichteten Schwenkachse (K), von einer Freilaufstellung (F) in eine Verschiebestellung (V) verschwenkbar ist, wobei in dieser Verschiebestellung (V) das Tor (3) oder wenigstens ein Teilabschnitt (4, 4', 5) des Tores (3) durch den Mitnehmer (24) verschiebbar ist.

9. Anordnung nach Anspruch 8, **dadurch gekennzeichnet, dass** der Mitnehmer (24) den Teilabschnitt (4, 4', 5) des Tores (3) über das am Teilabschnitt (4, 4', 5) angeordnete Verbindungselement (23) verschiebt.

10. Regallager (1) mit zumindest einem Tor (3) zum Trennen eines Palettenstellplatzes (2, 2', 2") von einem Regellagergang (16), **gekennzeichnet durch** eine Anordnung nach einem der Ansprüche 1 bis 9.

11. Regallager (1) nach Anspruch 10, **dadurch gekennzeichnet, dass** mehreren Palettenstellplätzen (2, 2', 2") ein Tor (3) zugeordnet ist, wobei das Tor (3) zumindest zwei Teilabschnitte (4, 4', 5) aufweist, die wahlweise gemeinsam, einzeln oder in Gruppen öffenbar sind, wobei pro Palettenplatz (P) ein Teilabschnitt (4, 4', 5) des Tores (3) vorgesehen ist und die Teilabschnitte (4, 4', 5) lösbar miteinander koppelbar sind.

12. Verfahren zum Verbinden, Öffnen, Schließen und Verschieben von Teilabschnitten von Toren eines Regallagers mit einer Anordnung nach einem der Ansprüche 1 bis 9, **gekennzeichnet durch** die Schritte:
- Messen des Abstandes (A_{VOR}) zwischen dem Distanzsensor (13a) und dem Rasthebel (21, 22),
- Speichern dieses Abstandes (A_{VOR}),
- Lösen bzw. Entkuppeln des Kupplungsmechanismus (11) **durch** Bewegen, vorzugsweise Verschwenken, des Mitnehmers (24) von der Freilaufstellung (F) in die Verschiebestellung (V), wobei der vorzugsweise federbeaufschlagte Rasthebel (21, 22) vom Verbindungslement (23) gelöst wird,
- Verschieben wenigstens eines Teilabschnitts (4, 4', 5) des Tores (3) mit dem Mitnehmer (24) der Entkuppel- und Verschiebevorrichtung (12),
- Schließen bzw. Einkuppeln des Kupplungsmechanismus (11) **durch** Bewegen, vorzugsweise Verschwenken, des Mitnehmers (24) von der Verschiebestellung (V) in die Freilaufstellung (F), wobei der vorzugsweise federbeaufschlagte Rasthebel (21, 22) wieder am Verbindungselement (23) einrastet,
- Messen des Abstandes (A_{NACH}) zwischen dem Distanzsensor (13a) und dem Rasthebel (21, 22),
- Vergleichen mit dem gespeicherten Abstand (A_{VOR}) vor dem Lösen bzw. Entkuppeln des Kupplungsmechanismus (11) und
- gegebenenfalls Ausgabe eines Warnsignals (W), wenn der nach dem Schließen bzw. Einkuppeln gemessene Abstand (A_{NACH}) zwischen Distanzsensor (13a) und Rasthebel (21, 22) vom vor dem Lösen bzw. Entkuppeln gemessenen Abstand (A_{VOR}) zwischen Distanzsensor (13a) und Rasthebel (21, 22) abweicht.

## Claims

1. An arrangement comprising
- at least one door (3) of a rack store (1), the door (3) in particular being guided on rails,
- a coupling mechanism (11) for releasably coupling the door (3) in a closed position (CL), and
- an uncoupling and displacing device (12) for opening and displacing the door (3), with which the coupling mechanism (11) is movable from the closed position (CL) into an open position (OP) and the door (3) is displaceable,
**characterized by**
- a closure sensor (13) which monitors the closed position (CL) of the coupling mechanism (11), wherein the closure sensor (13) is part of the uncoupling and displacing device (12).

2. The arrangement as claimed in claim 1, **characterized in that** the uncoupling and displacing device (12) is arranged on a storage and retrieval unit (14) which travels along a rail (15) of a rack-store aisle (16).

3. The arrangement as claimed in claim 1 or 2, **characterized in that** the door (3) comprises at least two portions (4, 4', 5) and one coupling mechanism (11) per portion (4, 4', 5).

4. The arrangement as claimed in claim 3, **characterized in that** each coupling mechanism (11) comprises a latching lever (21, 22) and a connecting element (23) as a counterpart to the latching lever (21, 22), wherein the latching lever (21, 22) is arranged on a rack upright (7) or on a first portion (4, 4') of the door (3) and the connecting element (23) is arranged on a second portion (4, 4', 5) of the door (3).

5. The arrangement as claimed in claim 4, **characterized in that** the latching lever (21, 22) is arranged in a pivotable manner on the first portion (4, 4') or on the rack upright (7), and such that it is spring-loaded in the closing direction (5B), and the connecting element (23) is arranged as a peg-like extension on the second portion (4, 4', 5).

6. The arrangement as claimed in claim 4 or 5, **characterized in that** the closure sensor (13) monitors the position of the latching lever (21, 22).

7. The arrangement as claimed in one of claims 1 to 6, **characterized in that** the closure sensor (13) is in the form of a distance sensor (13a) which detects the distance to the coupling mechanism (11), preferably by means of laser beams.

8. The arrangement as claimed in one of claims 3 to 7, **characterized in that** the uncoupling and displacing device (12) has a driver (24), which can preferably be pivoted along a pivot axis (K), aligned parallel to the rail (15) of the rack-store aisle, from a freewheeling position (F) into a displacement position (V), wherein the door (3), or at least a portion (4, 4', 5) of the door (3), is displaceable by the driver (24) in this displacement position (V).

9. The arrangement as claimed in claim 8, **characterized in that** the driver (24) displaces the portion (4, 4', 5) of the door (3) via the connecting element (23) arranged on the portion (4, 4', 5).

10. A rack store (1) having at least one door (3) for separating a pallet storage space (2, 2', 2") from a rack-store aisle (16), **characterized by** an arrangement as claimed in one of claims 1 to 9.

11. The rack store (1) as claimed in claim 10, **characterized in that** a plurality of pallet storage spaces (2, 2', 2") are assigned a door (3), wherein the door (3) has at least two portions (4, 4', 5), which can be opened optionally jointly, individually or in groups, wherein one portion (4, 4', 5) of the door (3) is provided per pallet space (P) and the portions (4, 4'. 5) can be coupled releasably together.

12. A method for connecting, opening, closing and displacing portions of doors of a rack store having an arrangement as claimed in one of claims 1 to 9, **characterized by** the following steps:
- measuring the distance (A_{VOR}) between the distance sensor (13a) and the latching lever (21, 22),
- storing this distance (A_{VOR}),
- releasing or uncoupling the coupling mechanism (11) by moving, preferably pivoting, the driver (24) from the freewheeling position (F) into the displacement position (V), wherein the latching lever (21, 22), which is preferably under spring loading, is released from the connecting element (23),
- displacing at least a portion (4, 4', 5) of the door (3) by the driver (24) of the uncoupling and displacing device (12),
- closing or engaging the coupling mechanism (11) by moving, preferably pivoting, the driver (24) from the displacement position (V) into the freewheeling position (F), wherein the latching lever (21, 22), which is preferably under spring loading, latches on the connecting element (23) again,
- measuring the distance (A_{NACH}) between the distance sensor (13a) and the latching lever (21, 22),
- comparing this distance (A_{NACH}) with the distance (A_{VOR}) stored before releasing or uncoupling of the coupling mechanism (11), and
- if appropriate emitting a warning signal (W) if the distance (A_{NACH}), measured after the closing or engaging operations, between the distance sensor (13a) and the latching lever (21, 22) deviates from the distance (A_{VOR}), measured before the releasing or uncoupling operations, between the distance sensor (13a) and the latching lever (21,22).

## Revendications

1. Système comportant
- au moins une porte (3), en particulier guidée sur rails, d'un entrepôt à rayonnages (1),
- un mécanisme de couplage (11) pour le couplage amovible de la porte (3) dans une position de fermeture (CL) et
- un dispositif de découplage et coulissement (12) pour ouvrir et faire coulisser la porte (3), permettant d'amener le mécanisme de couplage (11) hors de la position de fermeture (CL) dans une position d'ouverture (OP) et permettant de faire coulisser la porte (3),
**caractérisé par**
- un capteur de fermeture (13) qui contrôle la position de fermeture (CL) du mécanisme de couplage (11), ledit capteur de fermeture (13) étant une partie du dispositif de découplage et coulissement (12).

2. Système selon la revendication 1, **caractérisé en ce que** le dispositif de découplage et coulissement (12) est agencé sur un appareil de commande de rayonnage (14), lequel se déplace le long d'un rail (15) d'un couloir de l'entrepôt (16).

3. Système selon la revendication 1 ou 2, **caractérisé en ce que** la porte (3) comprend au moins deux parties (4, 4', 5) et un mécanisme de couplage (11) sur chaque partie (4, 4', 5).

4. Système selon la revendication 3, **caractérisé en ce que** chaque mécanisme de couplage (11) comprend un levier de blocage (21, 22) et un élément de liaison (23) formant la partie complémentaire du levier de blocage (21, 22), ledit levier de blocage (21, 22) étant agencé sur un montant de rayonnage (7) ou sur une première partie (4, 4') de la porte (3), et ledit élément de liaison (23) étant agencé sur une deuxième partie (4, 4', 5) de la porte (3).

5. Système selon la revendication 4, **caractérisé en ce que** le levier de blocage (21, 22) est agencé de manière pivotante sur la première partie (4, 4') ou sur le montant de rayonnage (7) en étant sollicité par ressort dans le sens de fermeture (SB), et l'élément de liaison (23) est agencé sur la deuxième partie (4, 4', 5) en formant une saillie en forme de téton.

6. Système selon la revendication 4 ou 5, **caractérisé en ce que** le capteur de fermeture (13) contrôle la position du levier de blocage (21, 22).

7. Système selon l'une quelconque des revendications 1 à 6, **caractérisé en ce que** le capteur de fermeture (13) est réalisé sous la forme d'un capteur de distance (13a), qui détecte, de préférence au moyen de rayons laser, la distance par rapport au mécanisme de couplage (11).

8. Système selon l'une quelconque des revendications 3 à 7, **caractérisé en ce que** le dispositif de découplage et coulissement (12) comporte un entraîneur (24) qui peut pivoter de préférence le long d'un axe de pivotement (K), parallèle au rail (15) du couloir de rayonnage, d'une position de course libre (F) dans une position de coulissement (V), et dans ladite position de coulissement (V), la porte (3) ou au moins une partie (4, 4', 5) de la porte (3) peut coulisser par l'intermédiaire de l'entraîneur (24).

9. Système selon la revendication 8, **caractérisé en ce que** l'entraîneur (24) déplace la partie (4, 4', 5) de la porte (3) par l'intermédiaire de l'élément de liaison (23) agencé sur la partie (4, 4', 5).

10. Entrepôt à rayonnages (1) comportant au moins une porte (3) pour faire la séparation entre un emplacement de stockage de palettes (2, 2', 2") et un couloir (16) de l'entrepôt à rayonnages, **caractérisé par** un système selon l'une quelconque des revendications 1 à 9.

11. Entrepôt à rayonnages (1) selon la revendication 10, **caractérisé en ce qu'**une porte (3) est associée à plusieurs emplacements de stockage de palettes (2, 2', 2"), ladite porte (3) comportant au moins deux parties (4, 4', 5) qui, au choix, peuvent s'ouvrir conjointement, individuellement ou en groupes, une partie (4, 4', 5) de la porte (3) étant prévue pour chaque emplacement de stockage de palettes (P) et les parties (4, 4', 5) pouvant être couplées entre elles de manière amovible.

12. Procédé pour relier, ouvrir, fermer et faire coulisser des parties de portes d'un entrepôt à rayonnages comportant un système selon l'une quelconque des revendications 1 à 9, **caractérisé par** les étapes :
- mesure de la distance (A_{VOR}) entre le capteur de distance (13a) et le levier de blocage (21, 22),
- mise en mémoire de ladite distance (A_{VOR}),
- ouverture ou découplage du mécanisme de couplage (11) sous l'effet du mouvement, de préférence un pivotement, de l'entraîneur (24) depuis la position de course libre (F) dans la position de coulissement (V), ledit levier de blocage (21, 22), de préférence sollicité par ressort, étant désolidarisé de l'élément de liaison (23),
- coulissement d'au moins une partie (4, 4', 5) de la porte (3) avec l'entraîneur (24) du dispositif de découplage et coulissement (12),
- fermeture ou couplage du mécanisme de couplage (11) sous l'effet du mouvement, de préférence un pivotement, de l'entraîneur (24) de la position de coulissement (V) à la position de course libre (F), ledit levier de blocage (21, 22), de préférence sollicité par ressort, étant à nouveau bloqué sur l'élément de liaison (23),
- mesure de la distance (A_{NACH}) entre le capteur de distance (13a) et le levier de blocage (21, 22),
- comparaison avec la distance (A_{VOR}), stockée en mémoire, mesurée avant l'ouverture ou le découplage du mécanisme de couplage (11), et
- le cas échéant, émission d'un signal d'alarme (W) lorsque la distance (A_{NACH}) entre le capteur de distance (13a) et le levier de blocage (21, 22), mesurée après la fermeture ou le couplage, est différente de la distance (A_{VOR}) entre le capteur de distance (13a) et le levier de blocage (21, 22), mesurée avant l'ouverture ou le découplage.
